(19) Europäisches Patentamt

European Patent Office

Office européen des brevets

(11) EP 1 193 218 A1

## (12) DEMANDE DE BREVET EUROPEEN

(43) Date de publication:
03.04.2002 Bulletin 2002/14

(51) Int Cl.⁷: $C01B\ 3/34$, $B01J\ 19/08$, $B01J\ 8/02$, $H01M\ 8/06$

(21) Numéro de dépôt: 01402493.9

(22) Date de dépôt: 27.09.2001

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **28.09.2000 FR 0012358**

(71) Demandeur: **Peugeot Citroen Automobiles SA 92200 Neuilly sur Seine (FR)**

(72) Inventeur: **Katz, Hélène 78320 La Verrière (FR)**

(74) Mandataire: **Thinat, Michel Cabinet Weinstein, 56 A, rue du Faubourg Saint-Honoré 75008 Paris (FR)**

(54) **Générateur d'hydrogène et procédé de génération d'hydrogène pour l'alimentation d'une pile à combustile**

(57) Ce générateur d'hydrogène comprend une zone(10) de reformage catalytique alimentée en gaz réactifs adaptés pour réagir et produire par reformage de l'hydrogène et dans laquelle est placé un matériau catalyseur adapté pour entretenir la réaction chimique entre les gaz réactifs.

Il comprend en outre une zone (12) de reformage complémentaire dans laquelle circulent les gaz réactifs, qui est associée à ladite zone (10) de reformage catalytique et qui est dotée de moyens pour produire un plasma avec les gaz réactifs, ces derniers moyens pouvant être activés lorsque la valeur de la puissance électrique fournie par la pile est inférieure à une valeur de puissance électrique cible.

L'invention s'applique à l'alimentation en hydrogène de piles à combustible installées sur des véhicules automobiles électriques.

Fig.1

## Description

La présente invention se rapporte à un générateur d'hydrogène par reformage, à un appareil de production d'hydrogène doté d'un tel générateur, et à un procédé de génération d'hydrogène.

En particulier, elle porte sur un générateur d'hydrogène destiné à l'alimentation en hydrogène d'une pile à combustible fournissant de l'énergie électrique à un organe fonctionnel de véhicule automobile, par exemple un moteur électrique assurant la propulsion du véhicule.

La pile est commandée par des moyens de contrôle électronique aptes à comparer la valeur de la puissance électrique fournie par la pile à une valeur de puissance électrique cible, nécessaire pour répondre au besoin de puissance de l'organe fonctionnel.

La pile à combustible peut être alimentée en hydrogène par un processeur de carburant, le carburant pouvant être par exemple un alcool, un hydrocarbure, du gaz naturel.

On connaît, dans l'état actuel de la technique, des générateurs d'hydrogène, du type comprenant une zone de reformage catalytique, constituée par un réacteur de reformage catalytique alimenté en gaz réactifs adaptés pour réagir et produire par reformage de l'hydrogène, dans lequel est placé un matériau catalyseur adapté pour entretenir la réaction chimique entre les gaz réactifs.

Lorsqu'ils sont destinés à être embarqués à bord de véhicules automobiles, les générateurs d'hydrogène de ce type, qui utilisent un réacteur de reformage catalytique, présentent un inconvénient majeur, dans la mesure où ils présentent un temps de démarrage à froid rédhibitoire, pouvant aller jusqu'à environ 30 minutes, du fait qu'il est nécessaire de faire monter le réacteur de reformage catalytique à haute température, par exemple de l'ordre de 250°C à 350°C pour le reformage du méthanol, ou de l'ordre de 700°C à 1000°C pour le reformage de l'essence ou du gaz naturel.

Le but de l'invention est de pallier cet inconvénient.

Elle a donc pour objet un générateur d'hydrogène du type précité, caractérisé en ce qu'il comporte en outre une zone de reformage complémentaire dans laquelle circulent les gaz réactifs, qui est associée à ladite zone de reformage catalytique et qui est dotée de moyens pour produire un plasma froid avec les gaz réactifs, ces derniers moyens pouvant être activés lorsque la valeur de la puissance électrique fournie par la pile est inférieure à la valeur de la puissance électrique cible.

L'intérêt du plasma froid, ou plasma non thermique, est notamment de diminuer les températures de réaction, en ionisant les espèces chimiques, ce qui limite les quantités de $CO_2$ et de suies produites, remplaçant ainsi un catalyseur, et de permettre ainsi un démarrage quasi-instantané de l'installation.

La diminution de la durée de démarrage à froid est avantageuse en particulier dans le cas du reformage d'hydrocarbures et d'alcools, qui nécessitent des températures relativement élevées, dans la mesure où la mise en oeuvre du reformage par plasma est sensiblement instantanée.

Le générateur d'hydrogène selon l'invention peut également comporter une ou plusieurs des caractéristiques suivantes, prises isolément ou selon toutes les combinaisons techniquement possibles :

- les moyens pour produire un plasma froid avec les gaz réactifs sont activés lors du démarrage du générateur d'hydrogène, jusqu'à ce que la zone de reformage catalytique ait atteint une température de fonctionnement adéquate pour générer à elle seule l'hydrogène nécessaire à la pile devant fournir la puissance électrique cible;
- les moyens pour produire le plasma comportent un ensemble d'électrodes excitatrices raccordées à une source d'alimentation à haute tension et adaptées pour engendrer, conjointement avec cette dernière, des arcs électriques dans la zone de reformage par plasma froid ;
- les électrodes excitatrices sont réparties le long de ladite zone de reformage par plasma froid par paires d'électrodes de polarité opposée disposées en des emplacements sensiblement opposés de cette zone, les électrodes de même polarité étant alignées les unes par rapport aux autres ;
- les électrodes excitatrices sont réparties le long de ladite zone de reformage par plasma froid par paires d'électrodes de polarité opposée disposées en des emplacements sensiblement opposés de cette zone, les électrodes de chaque paire étant angulairement décalées par rapport aux électrodes d'une paire adjacente ;
- il comporte au moins une première électrode excitatrice s'étendant le long de ladite zone de reformage complémentaire, extérieurement à cette dernière, et une deuxième électrode excitatrice s'étendant dans la zone de reformage par plasma froid, coaxialement à la première électrode excitatrice ;
- la zone de reformage par plasma froid est raccordée en série à la zone de reformage catalytique, en amont de cette dernière, en considérant le sens d'écoulement des gaz réactifs dans le générateur ;
- la zone de reformage par plasma froid est raccordée en dérivation par rapport à la zone de reformage catalytique ;
- la zone de reformage catalytique est placée dans la zone de reformage par plasma froid ;
- il comporte en outre des moyens d'oxydation du CO produit par la réaction chimique de reformage ;
- les moyens d'oxydation du CO sont raccordés à la sortie de la zone de reformage catalytique ;
- les moyens d'oxydation du CO sont raccordés à la sortie de la zone de reformage catalytique et à la sortie de la zone de reformage par plasma froid ;

- il comporte en outre un moyen d'obturation momentanée raccordé en aval de la zone de reformage par plasma froid, en considérant le sens d'écoulement des gaz réactifs dans le générateur.

L'invention a également pour objet un appareil de production d'hydrogène par reformage pour l'alimentation d'une pile à combustible fournissant de l'énergie électrique à un organe fonctionnel de véhicule automobile, comprenant un étage de reformage raccordé en sortie d'un étage d'alimentation dudit étage de reformage en composés réactifs adaptés pour réagir et produire par reformage de l'hydrogène, caractérisé en ce que l'étage de reformage comporte un générateur d'hydrogène tel que défini ci-dessus, et en ce que l'étage d'alimentation dudit étage de reformage comprend des réservoirs respectifs de réactifs raccordés à une zone d'alimentation en réactifs en communication avec la zone de reformage catalytique et avec la zone de reformage par plasma froid.

De préférence, les réactifs comprennent, d'une part, un carburant ( hydrocarbure, alcool, gaz naturel ou autre) et, d'autre part, de l'eau et de l'oxygène.

Avantageusement, il comporte en outre un brûleur pour la vaporisation dudit carburant et de l'eau.

L'invention a enfin pour objet un procédé de génération d'hydrogène pour l'alimentation d'une pile à combustible fournissant de l'énergie électrique à un organe fonctionnel de véhicule automobile, la pile étant commandée par des moyens de contrôle électroniques aptes à comparer la valeur de la puissance électrique fournie par la pile à une valeur de puissance électrique cible, nécessaire pour répondre au besoin de puissance de l'organe fonctionnel, ledit procédé étant mis en oeuvre par un générateur d'hydrogène comprenant d'une part une zone de reformage catalytique alimentée en gaz réactifs adaptés pour réagir et produire par reformage de l'hydrogène et dans laquelle est placé un matériau catalyseur adapté pour entretenir la réaction chimique entre les gaz réactifs, et d'autre part une zone de reformage complémentaire dans laquelle circulent les gaz réactifs, qui est associée à ladite zone de reformage catalytique et qui est dotée de moyens pour produire un plasma froid avec les gaz réactifs, caractérisé en ce qu'il comprend l'étape consistant à activer les moyens de production du plasma froid lorsque la valeur de la puissance électrique fournie par la pile est inférieure à la valeur de la puissance électrique cible.

D'autres caractéristiques et avantages de l'invention ressortiront de la description suivante, donnée uniquement à titre d'exemple, et faite en référence aux dessins annexés sur lesquels :

- la figure 1 illustre une vue schématique d'un premier exemple de réalisation d'un générateur d'hydrogène conforme à l'invention ;
- la figure 2 montre une vue schématique d'un autre exemple de réalisation du générateur d'hydrogène de la figure 1 ;
- la figure 3 montre un troisième exemple de réalisation d'un générateur d'hydrogène conforme à l'invention ;
- la figure 4 montre une vue schématique d'un quatrième exemple de réalisation d'un générateur d'hydrogène conforme à l'invention ;
- les figures 5, 6 et 7 illustrent schématiquement différents modes de réalisation respectifs du réacteur de reformage par plasma froid ; et
- la figure 8 montre une vue schématique d'un appareil de production d'hydrogène doté d'un générateur d'hydrogène selon l'invention.

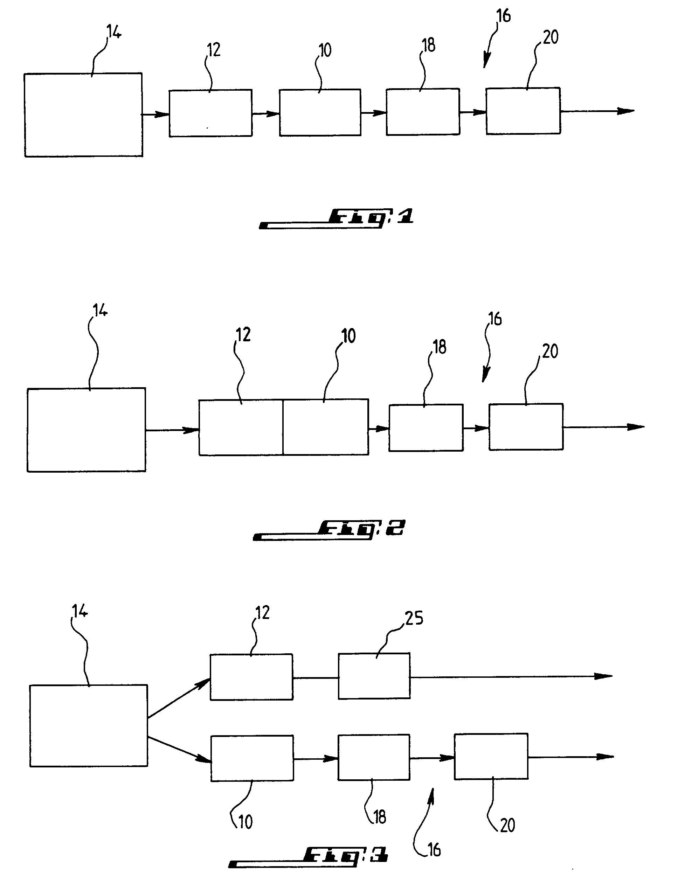

En se référant tout d'abord aux figures 1 à 4, le générateur d'hydrogène selon l'invention comporte principalement une zone 10 de reformage catalytique et une zone 12 de reformage complémentaire par plasma froid, alimentées en gaz réactifs, en l'espèce en un mélange de carburant sous forme gazeuse, de vapeur d'eau et d'air fourni à partir d'une zone 14 d'alimentation correspondante.

Dans l'exemple de réalisation représenté, ces zones de reformage sont constituées par des réacteurs respectifs de reformage catalytique et de reformage par plasma froid.

Le générateur d'hydrogène est raccordé, en sortie, à une pile à combustible (non représentée) pour son alimentation en hydrogène.

La zone 10 de reformage catalytique contient un matériau catalyseur approprié, de type classique, capable d'entretenir la réaction chimique entre les gaz réactifs de manière à produire, en sortie, de l'hydrogène et du CO.

La pile est commandée par des moyens de contrôle électroniques (non représentés) de type classique, ces moyens de contrôle ayant en particulier la fonction de comparer la puissance électrique fournie par la pile à une valeur de puissance cible demandée par l'organe fonctionnel alimenté. Cette puissance cible peut être par exemple la puissance instantanée fournie par le moteur électrique propulsant le véhicule, la moyenne de la puissance instantanée fournie par ce même moteur de propulsion sur un intervalle de temps donné, la valeur maximum de la puissance instantanée fournie par ce même moteur de propulsion sur un intervalle de temps donné, une de ces trois grandeurs augmentée d'un coefficient de sécurité, ou toute autre valeur.

Les méthodes et les moyens de mesure de la puissance électrique d'un moteur sont bien connues de l'homme du métier et ne seront donc pas décrites ici.

De même, les méthodes et les moyens de mesure de la puissance électrique d'une pile à combustible sont bien connues de l'homme du métier et ne seront pas développées ici, pas plus que les algorithmes de comparaison entre puissance fournie par la pile et puissance cible, qui sont simples et classiques et sortent de l'objet de l'invention.

La zone 12 de reformage complémentaire est pourvue de moyens pour produire un plasma froid avec le mélange gazeux incident de manière à y constituer un milieu réactionnel adapté à la conversion recherchée.

La zone 10 de reformage catalytique et la zone 12 de reformage par plasma froid sont raccordées, en sortie, à une zone 16 de conversion du CO produit, par oxydation de ce dernier.

Par exemple, cette zone 16 de conversion comporte un premier secteur 18 de réaction du gaz à l'eau, de type classique, connue sous l'appellation WGS (« Water Gas Shift », en anglais) associée à un secteur 20 d'oxydation préférentielle, également de type classique, connu sous l'appellation PrOx (« Preferential Oxidation », en anglais).

Comme cela est classique, les réactions chimiques mises en oeuvre au sein de ces secteurs 18 et 20 sont des réactions de type réaction du gaz à l'eau et réaction d'oxydation préférentielle, comme suit :

$$CO + H_2O \leftrightarrows CO_2 + H_2 \qquad (1)$$

et

$$CO + 1/2\ O_2 \leftrightarrows CO_2 \qquad (2)$$

Comme on le voit sur les figures 1 à 4, la zone de reformage catalytique 10 et la zone 12 de reformage par plasma froid peuvent être réalisées de différentes façons.

Tout d'abord, en référence à la figure 1, ces zones 10 et 12 peuvent être réalisées sous la forme de réacteurs respectifs de reformage catalytique et de reformage complémentaire par plasma froid disposés en série, de telle sorte que le réacteur de reformage par plasma 12 soit disposé en amont du réacteur de reformage catalytique 10, en considérant le sens d'écoulement du mélange gazeux réactionnel dans le générateur.

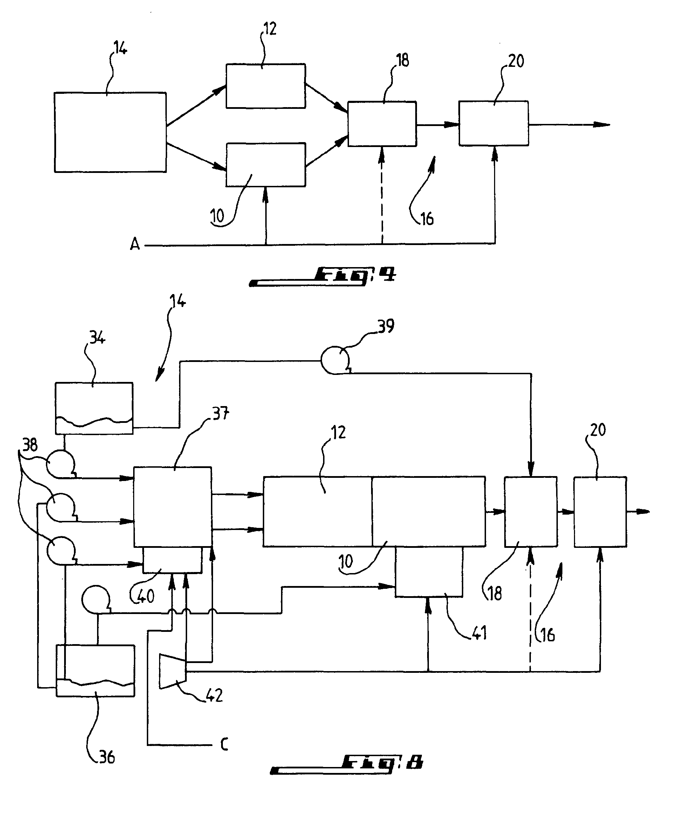

En référence à la figure 2, la zone de reformage catalytique et la zone de reformage complémentaire peuvent être intégrées au sein d'un même réacteur doté de deux zones constituant l'une la zone de reformage catalytique 10 et l'autre la zone de reformage par plasma 12, de telle sorte que la zone de reformage par plasma 12 soit située en amont de la zone de reformage catalytique 10 ou encore que les deux zones soient intégrées l'une à l'autre comme cela sera décrit ci-dessous en référence à la figure 7.

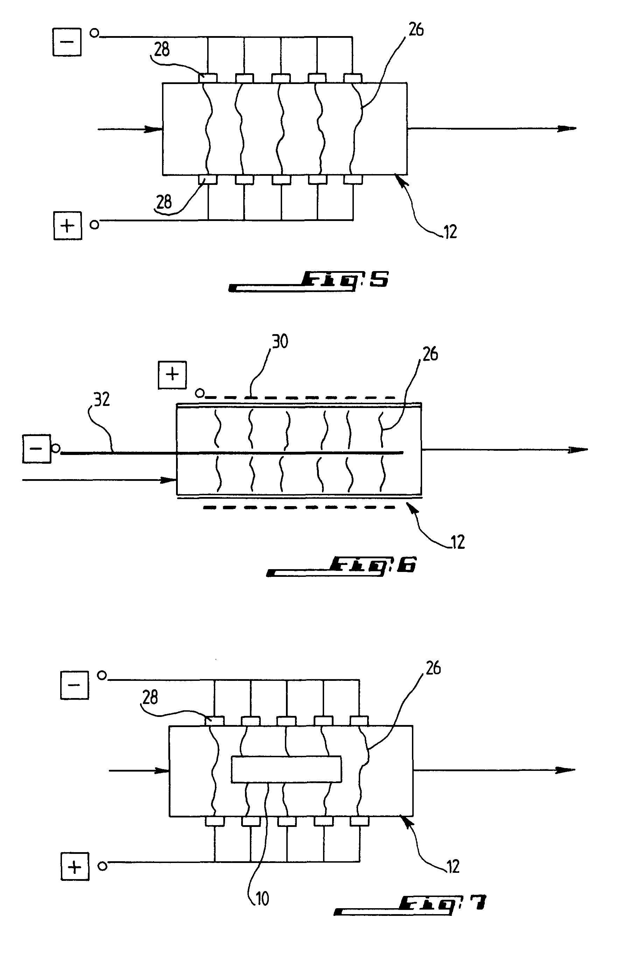

Par ailleurs, selon d'autres exemples de réalisation, visibles sur les figures 3 et 4, un réacteur 12 de reformage par plasma peut être raccordé en dérivation par rapport à un réacteur 10 de reformage catalytique.

Ainsi, par exemple, en référence à la figure 3, le réacteur 12 de reformage par plasma peut être directement raccordé à la pile à combustible (non représentée), la zone 16 d'oxydation de CO étant raccordée à la sortie du réacteur 10 de reformage catalytique.

Dans ce cas, on place, après le réacteur 12 de reformage par plasma froid, une membrane 25 de séparation de $H_2$, de type classique.

En variante, comme visible sur la figure 4, la zone 16 d'oxydation du CO peut être raccordée, en amont, à la sortie de la zone 10 de reformage catalytique et de la zone 12 de reformage par plasma et, en aval, à la pile à combustible. Comme visible sur cette figure, le secteur 20 d'oxydation préférentielle, la zone 10 de reformage catalytique et le cas échéant le secteur 18 de réaction du gaz à l'eau, comme représenté en pointillés, sont alimentés en air A.

On va maintenant décrire, en référence aux figures 5, 6 et 7, la constitution de la zone 12 de reformage par plasma froid, selon un mode de réalisation selon lequel elle est constituée par un réacteur de reformage.

Sur ces figures, on a représenté par des flèches le flux des produits réactionnels.

Le réacteur 12 est généralement cylindrique et est pourvu d'électrodes d'excitation raccordées à une source d'alimentation à haute tension continue ou alternative, capable d'engendrer, dans le volume interne du réacteur 12, des arcs électriques, tels que 26.

Une source de tension alternative permet avantageusement de faire varier la fréquence en fonction de la nature des molécules à ioniser.

On peut préciser également que la notion d'arc électrique doit être entendue au sens large. Elle désigne par exemple une zone de molécules ionisées par des micro-décharges électriques, formant un volume qui occupe quasiment tout l'espace situé entre les électrodes.

Selon un premier exemple de réalisation, visible sur la figure 5, les électrodes excitatrices 28 sont réparties le long de la surface cylindrique du réacteur 12.

Par exemple, elles sont réparties par paires d'électrodes de polarité opposée montées le long de la paroi du réacteur 12, les électrodes de chaque paire étant disposées deux à deux selon un diamètre du réacteur 12 de sorte que les électrodes de même polarité sont alignées.

On obtient dès lors, en fonctionnement, un ensemble d'arcs 26 généralement parallèles s'étendant tranversalement à l'intérieur du réacteur.

Il est également possible, en variante, de décaler angulairement, par exemple de 90°, les électrodes de chaque paire par rapport aux électrodes d'une paire immédiatement adjacente. On obtient dès lors un décalage consécutif des arcs 26 engendrés par les électrodes 26 permettant de traiter tous les secteurs angulaires du réacteur.

Selon un autre mode de réalisation, visible sur la figure 6, les électrodes excitatrices peuvent être agencées de façon coaxiale, de telle sorte qu'un premier ensemble d'électrodes 30 s'étende de façon externe le long de la surface périphérique externe du réacteur 12 et qu'une deuxième électrode 32, coaxiale aux premières électrodes 30, s'étende à l'intérieur du réacteur 12, coaxialement à ce dernier. Les électrodes du premier ensemble peuvent être soit agencées sous la forme d'une seule électrode entourant le réacteur, soit sous la forme d'un réseau d'électrodes réparties autour du réacteur.

On obtient ainsi un ensemble d'arcs électriques 26 s'étendant le long du volume interne du réacteur 12. Dans tous les cas, les électrodes peuvent avantageusement être séparées par des zones électriquement isolantes.

On notera que, comme cela est représenté sur la figure 7, le mode de réalisation visible sur la figure 5, selon lequel les électrodes 28 sont disposées le long de la surface périphérique externe de la paroi du réacteur 12 convient tout particulièrement à un agencement selon lequel la zone 10 de reformage catalytique et la zone 12 de reformage par plasma sont intégrées et, en particulier, à un agencement selon lequel la zone 10 de reformage catalytique se situe dans la zone 12 de reformage par plasma. On notera que, même dans cette configuration, la zone 10 de reformage catalytique peut se trouver en aval de la zone 12 de reformage par plasma, c'est-à-dire que les gaz réactifs traversent au moins une partie de la zone 12 avant de traverser la zone 10.

On notera que ce mode de réalisation est avantageux dans la mesure où le plasma engendré dans le mélange réactionnel sous l'action des arcs électriques 26 permet un chauffage de la zone 10 de reformage catalytique et une activation des réactions de reformage.

On va maintenant décrire, en référence à la figure 8, la structure d'un appareil de production d'hydrogène conforme à l'invention, comprenant un étage de reformage doté d'un générateur de plasma tel que décrit précédemment.

On notera que l'exemple de réalisation visible sur la figure 8 correspond au mode de réalisation décrit précédemment en référence à la figure 2, selon lequel un réacteur 12 de reformage par plasma est raccordé en série sur le réacteur de reformage catalytique 10.

Comme indiqué précédemment, et pour une application selon laquelle l'appareil de production d'hydrogène est destiné à l'alimentation d'une pile à combustible embarquée à bord d'un véhicule automobile, le générateur d'hydrogène est raccordé, en sortie, à la pile à combustible (non représentée).

En amont, la zone 14 d'alimentation en gaz réactifs des réacteurs de reformage comporte un réservoir 34 d'alimentation en eau et un réservoir 36 d'alimentation en carburant.

Chacun des réservoirs 34 et 36 est équipé de pompes, telles que 38, assurant l'alimentation des réacteurs de reformage et des autres zones de l'installation, le cas échéant le réservoir 34 d'alimentation en eau alimentant également le secteur 18 de réaction du gaz à l'eau, par l'intermédiaire d'une pompe 39.

Dans le cas d'hydrocarbures non miscibles à l'eau, la zone d'alimentation comporte une chambre de pré-mélange 37 dans laquelle débouchent les pompes.

La zone d'alimentation est également dotée d'un brûleur 40 en vue de la vaporisation et du mélange de ces composés dans la chambre 14.

On comprendra que l'implantation d'un brûleur secondaire 41 sur le réacteur catalytique peut s'avérer utile dans le cas d'un besoin complémentaire d'énergie. On notera que les brûleurs sont alimentés en carburant. Le brûleur 40 est également alimenté par des gaz de sortie de pile au moyen d'une conduite C.

Néanmoins, du fait de l'utilisation du reformeur par plasma, le brûleur complémentaire 41 peut avoir une capacité plus faible qu'en l'absence de ce reformeur par plasma (zone catalytique seule).

Par ailleurs, afin de se placer dans des conditions d'oxydation partielle permettant de consommer moins d'énergie, un compresseur à air 42 assure l'alimentation des réacteurs en oxygène de l'air. Ce compresseur 42 assure également l'alimentation des brûleurs 40 et 41 en air, du secteur 20 d'oxydation préférentielle et, de façon optionnelle, comme représenté en pointillés, du secteur 18 de réaction du gaz à l'eau.

On pourra noter que les conditions d'oxydation partielle ne consomment pas d'eau, contrairement aux conditions de vaporeformage. Néanmoins, elles sont exothermiques, contrairement au vaporeformage, qui est endothermique. En régime stationnaire, il est souhaitable de se placer au voisinage des conditions autothermiques (en modifiant les ratios $C/O/H_2O$), qui représentent un point d'équilibre énergétique entre le vaporeformage et l'oxydation partielle. Au démarrage, on préfère néanmoins se placer dans des conditions d'oxydation partielle qui sont exothermiques et consomment peu d'énergie et peu d'eau.

On notera enfin que, dans le but d'améliorer le temps de séjour du mélange gazeux réactif délivré par la chambre 14 dans le réacteur 12 de reformage par plasma, il est possible de doter le générateur d'hydrogène d'un moyen d'obturation momentanée, raccordé en aval de la zone de reformage par plasma froid.

Par exemple, ce moyen d'obturation est constitué par une ou plusieurs électrovannes (non représentées) pilotées de manière à obturer momentanément ce réacteur 12 et branchées en aval du réacteur de reformage par plasma. Par exemple, l'électrovanne vient se monter en sortie du réacteur 12 de reformage par plasma, dans le cas où celui-ci est monté en parallèle sur la chambre de reformage catalytique 10, ou en sortie de la chambre 10 lorsqu'ils sont montés en série. Dans ce cas, l'électrovanne peut également être montée en sortie de la zone 16 de conversion du CO produit. L'électrovanne peut également être en aval de tout réacteur ou toute zone dans laquelle l'on souhaite augmenter le temps de séjour. On peut également envisager de prévoir une électrovanne en sortie de chaque zone catalytique. Cette électrovanne doit, de préférence, pouvoir être actionnée au démarrage, ou en cas de besoin momentané de puissance, en évitant toutefois de former des points chauds.

Comme on le conçoit, le générateur d'hydrogène et l'appareil de production qui viennent d'être décrits, qui utilisent, conjointement, une chambre de reformage catalytique et un réacteur de reformage par plasma froid, permettent un démarrage sensiblement instantané de la production d'hydrogène, par exemple de l'ordre de 1 à 5 secondes. De préférence, le réacteur de reformage par plasma est activé lors du démarrage du dispositif, jusqu'à ce que la chambre de reformage catalytique ait atteint une température adéquate.

Par température adéquate, il faut entendre la température optimale à laquelle doit avoir lieu une réaction catalytique, pour d'une part offrir les taux de transformation souhaités, et d'autre part permettre le fonctionnement du catalyseur dans les meilleures conditions de durée de vie. Lorsque la réaction a lieu à température élevée, il faut en effet un certain temps pour atteindre les températures de 500°C à 1000°C, car le support catalytique , généralement réalisé à base d'une céramique électriquement et thermiquement isolante doit être amené à la température voulue.

Par ailleurs, dans le cas où les besoins en quantité d'hydrogène produit augmentent, par exemple pour un véhicule propulsé par un moteur électrique alimenté par une pile à combustible, lors d'accélérations ou en côte, il est possible de mettre en action le réacteur de reformage par plasma, en cours de fonctionnement de la chambre de reformage catalytique.

Il faut noter qu'à chaque type de catalyseur correspond un temps de contact optimal, défini comme étant le rapport de la masse ou du volume de catalyseur au débit de gaz réactifs circulants, qui est aisément déterminable par l'homme du métier au moyen de simples tests de routine. Ainsi, le débit d'hydrogène sortant de la chambre de reformage catalytique n'augmente pas forcément linéairement avec l'augmentation du débit des gaz entrants. En particulier dans le cas où la chambre de reformage catalytique et le réacteur de reformage par plasma froid sont intégrés ou en série, l'activation du réacteur de reformage par plasma froid peut avantageusement accroître la production d'hydrogène sans nécessairement augmenter le débit de gaz réactifs entrant. D'une certaine manière, on peut considérer que le plasma froid a une action fictive de diminution du temps de contact du catalyseur.

Par ailleurs, et en particulier dans le cas où la chambre de reformage catalytique et le réacteur de reformage par plasma sont intégrés ou en série, la chaleur produite par le plasma peut être utilisée pour le chauffage de la chambre de reformage catalytique et du reste de l'appareil, et en particulier la zone de conversion du CO. On diminue ainsi sensiblement la consommation énergétique au démarrage, au niveau des brûleurs.

On conçoit par ailleurs que le générateur et l'appareil qui viennent d'être décrits peuvent être agencés sous la forme d'un système léger et compact et peuvent être réalisés à faible coût, dans la mesure où ils ne nécessitent pas l'utilisation de métaux précieux, outre ceux utilisés généralement comme catalyseurs dans les zones catalytiques.

Dans le cas où la chambre de reformage catalytique et le réacteur constituent des unités distinctes, montées en série ou en parallèle, il est possible de mettre sous pression la chambre de reformage catalytique.

On notera enfin que le générateur d'hydrogène par plasma froid qui vient d'être décrit a une température de fonctionnement plus faible que celle d'un générateur d'hydrogène par reformage catalytique.

Bien entendu, l'invention ne se limite pas aux différents modes de réalisations qui ont été décrits.

Les termes "organe fonctionnel" peuvent ainsi être entendus pour désigner un organe autre que l'organe principal de propulsion du véhicule. On comprendra par exemple que le dispositif selon l'invention est également adapté pour une pile à combustible utilisée comme source de puissance électrique auxiliaire, en appoint d'un moteur thermique de type classique.

Par ailleurs, les exemples de réalisation du générateur d'hydrogène selon l'invention ont été décrits essentiellement en référence à une pile à combustible de type PEMFC (Proton Exchange Membrane Fuel Cell, en anglais) qui nécessite la réaction du gaz à l'eau (WGS) et/ou l'oxydation préférentielle (PrOx), mais le dispositif selon l'invention s'applique également à d'autres types de pile, notamment la pile combustible de type SOFC(Solid Oxid Fuel Cell, en anglais), qui constitue un système plus simple que la pile de type PEMFC car ne nécessitant pas ces réactions.

## Revendications

**1.** Générateur d'hydrogène, pour l'alimentation d'une pile à combustible fournissant de l'énergie électrique à un organe fonctionnel de véhicule automobile, la pile étant commandée par des moyens de contrôle électroniques aptes à comparer la valeur de la puissance électrique fournie par la pile à une valeur de puissance électrique cible, nécessaire pour répondre au besoin de puissance de l'organe fonctionnel, le générateur d'hydrogène comprenant une zone (10) de reformage catalytique alimentée en gaz réactifs adaptés pour réagir et produire par reformage de l'hydrogène et dans laquelle est placé un matériau catalyseur adapté pour entretenir la réaction chimique entre les gaz réactifs, **caractérisé en ce qu'**il comporte en outre une zone (12) de reformage complémentaire dans laquelle circulent les gaz réactifs, qui est associée à ladite zone (10) de reformage catalytique et qui est dotée de moyens (28; 30; 32) pour produire un plasma froid avec les gaz réactifs, ces derniers moyens (28; 30; 32) pouvant être activés lorsque la valeur de la puissance électrique fournie par la pile est inférieure à la valeur de la puissance électrique cible.

2. Générateur d'hydrogène selon la revendication 1, **caractérisé en ce que** les moyens (28; 30; 32) pour produire un plasma froid avec les gaz réactifs sont activés lors du démarrage du générateur d'hydrogène, jusqu'à ce que la zone de reformage catalytique (10) ait atteint une température de fonctionnement adéquate pour générer à elle seule l'hydrogène nécessaire à la pile devant fournir la puissance électrique cible.

3. Générateur selon la revendication 1 ou 2, **caractérisé en ce que** les moyens pour produire le plasma comportent un ensemble d'électrodes excitatrices (28;30,32) raccordées à une source d'alimentation à haute tension et adaptées pour engendrer, conjointement avec cette dernière, des arcs électriques (26) dans la zone (12) de reformage par plasma froid.

4. Générateur selon la revendication 3, **caractérisé en ce que** les électrodes excitatrices (28) sont réparties le long de ladite zone (12) de reformage par plasma froid par paires d'électrodes de polarité opposée disposées en des emplacements sensiblement opposés de cette zone, les électrodes de même polarité étant alignées les unes par rapport aux autres.

5. Générateur selon la revendication 3, **caractérisé en ce que** les électrodes excitatrices sont réparties le long de ladite zone (12) de reformage par plasma froid par paires d'électrodes de polarité opposée disposées en des emplacements sensiblement opposés de cette zone, les électrodes de chaque paire étant angulairement décalées par rapport aux électrodes d'une paire adjacente.

6. Générateur selon la revendication 3, **caractérisé en ce qu'**il comporte au moins une première électrode excitatrice (30) s'étendant le long de ladite zone (12) de reformage par plasma froid, extérieurement à cette dernière, et une deuxième électrode excitatrice (32) s'étendant dans la zone de reformage par plasma froid, coaxialement à la première électrode excitatrice (30).

7. Générateur selon l'une quelconque des revendications 1 à 6, **caractérisé en ce que** la zone (12) de reformage par plasma froid est raccordée en série à la zone de reformage catalytique (10), en amont de cette dernière, en considérant le sens d'écoulement des gaz réactifs dans le générateur.

8. Générateur selon l'une quelconque des revendications 1 à 6, **caractérisé en ce que** la zone (12) de reformage par plasma froid est raccordée en dérivation par rapport à la zone (10) de reformage catalytique.

9. Générateur selon l'une quelconque des revendications 1 à 6, **caractérisé en ce que** la zone (10) de reformage catalytique est placée dans la zone de reformage par plasma froid.

10. Générateur selon l'une quelconque des revendications 1 à 9, **caractérisé en ce qu'**il comporte en outre des moyens (16) d'oxydation du CO produit par la réaction de reformage.

11. Générateur selon la revendication 10, **caractérisé en ce que** les moyens (16) d'oxydation du CO sont raccordés à la sortie de la zone (10) de reformage catalytique.

12. Générateur selon la revendication 10, dépendante de la revendication 8, **caractérisé en ce que** les moyens (16) d'oxydation du CO sont raccordés à la sortie de la zone (10) de reformage catalytique et à la sortie de la zone (12) de reformage par plasma froid.

13. Générateur selon l'une quelconque des revendications 1 à 12, **caractérisé en ce qu'**il comporte en outre un moyen d'obturation momentanée raccordé en aval de la zone (12) de reformage par plasma froid, en considérant le sens d'écoulement des gaz réactifs dans le générateur.

14. Appareil de production d'hydrogène par reformage pour l'alimentation d'une pile à combustible fournissant de l'énergie électrique à un organe fonctionnel de véhicule automobile, comprenant un étage de reformage raccordé en sortie d'un étage d'alimentation (34, 36) dudit étage de reformage en composés réactifs adaptés pour réagir et produire par reformage de l'hydrogène, **caractérisé en ce que** l'étage de reformage comporte un générateur d'hydrogène selon l'une quelconque des revendications 1 à 13, et **en ce que** l'étage d'alimentation dudit étage de reformage comprend des réservoirs respectifs de réactifs raccordés à une zone (14) d'alimentation en réactifs en communication avec la zone (10) de reformage catalytique et avec la zone (12) de reformage par plasma froid.

15. Appareil selon la revendication 14, **caractérisé en ce que** les réactifs comprennent, d'une part, un carburant et, d'autre part, de l'eau et de l'oxygène.

16. Appareil selon la revendication 15, **caractérisé en ce qu'**il comporte en outre un brûleur (40) pour la vaporisation dudit carburant et de l'eau.

17. Procédé de génération d'hydrogène pour l'alimentation d'une pile à combustible fournissant de l'énergie électrique à un organe fonctionnel de véhicule automobile, la pile étant commandée par des moyens de contrôle électroniques aptes à comparer la valeur de la puissance électrique fournie par la pile à une valeur de puissance électrique cible, nécessaire pour répondre au besoin de puissance de l'organe fonctionnel, ledit procédé étant mis en oeuvre par un générateur d'hydrogène comprenant d'une part une zone (10) de reformage catalytique alimentée en gaz réactifs adaptés pour réagir et produire par reformage de l'hydrogène et dans laquelle est placé un matériau catalyseur adapté pour entretenir la réaction chimique entre les gaz réactifs, et d'autre part une zone (12) de reformage complémentaire dans laquelle circulent les gaz réactifs, qui est associée à ladite zone (10) de reformage catalytique et qui est dotée de moyens (28;30;32) pour produire un plasma froid avec les gaz réactifs, **caractérisé en ce qu'**il comprend l'étape consistant à activer les moyens (28; 30; 32) de production du plasma froid lorsque la valeur de la puissance électrique fournie par la pile est inférieure à la valeur de la puissance électrique cible.

_Fig. 1_

_Fig. 2_

_Fig. 3_

Fig. 4

Fig. 8

Fig.5

Fig.6

Fig.7

**Office européen des brevets**

**RAPPORT DE RECHERCHE EUROPEENNE**

Numéro de la demande

EP 01 40 2493

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | WO 00 26518 A (MASSACHUSETTS INST TECHNOLOGY) 11 mai 2000 (2000-05-11)<br><br>* le document en entier * | 1-7,10, 11,14, 15,17 | C01B3/34<br>B01J19/08<br>B01J8/02<br>H01M8/06 |
| X | EP 0 900 591 A (ABB RESEARCH LTD) 10 mars 1999 (1999-03-10)<br>* colonne 6, ligne 20 - ligne 49 *<br>* revendications; figure 2 * | 1-6,9,14 | |
| X | DE 197 57 936 A (ABB RESEARCH LTD) 8 juillet 1999 (1999-07-08)<br>* le document en entier * | 1-6,9,14 | |
| X | PATENT ABSTRACTS OF JAPAN vol. 2000, no. 01, 31 janvier 2000 (2000-01-31) & JP 11 278802 A (FUJITSU LTD;JAPAN FINE CERAMICS CENTER), 12 octobre 1999 (1999-10-12)<br>* abrégé * | 1-6,9,14 | |
| | | | DOMAINES TECHNIQUES RECHERCHES (Int.Cl.7) |
| X | WO 98 28223 A (ETIEVANT CLAUDE ;H2 TECH S A R L (FR); ROSHD MUSTAPHA (FR)) 2 juillet 1998 (1998-07-02)<br>* page 5, ligne 9 - page 7, ligne 24 *<br>* page 11, ligne 16 - ligne 32 *<br>* page 13, ligne 25 - ligne 39 * | 1 | C01B<br>B01J<br>H01M |
| A | US 5 409 784 A (COHN DANIEL R ET AL) 25 avril 1995 (1995-04-25)<br>* colonne 7, ligne 66 - colonne 8, ligne 49 * | 1,17 | |
| A | US 5 006 425 A (TAKABAYASHI YASUHIRO) 9 avril 1991 (1991-04-09)<br>* revendication 1 * | 1,17 | |

Le présent rapport a été établi pour toutes les revendications

| Lieu de la recherche | Date d'achèvement de la recherche | Examinateur |
|---|---|---|
| LA HAYE | 4 janvier 2002 | Van der Poel, W |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 01 40 2493

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-01-2002

| Document brevet cité au rapport de recherche | | Date de publication | Membre(s) de la famille de brevet(s) | | Date de publication |
|---|---|---|---|---|---|
| WO 0026518 | A | 11-05-2000 | WO | 0026518 A1 | 11-05-2000 |
| EP 0900591 | A | 10-03-1999 | DE | 19739181 A1 | 11-03-1999 |
| | | | AU | 728973 B2 | 25-01-2001 |
| | | | AU | 8318098 A | 18-03-1999 |
| | | | CA | 2246214 A1 | 08-03-1999 |
| | | | EP | 0900591 A1 | 10-03-1999 |
| | | | JP | 11128728 A | 18-05-1999 |
| | | | NO | 984094 A | 09-03-1999 |
| | | | US | 6136278 A | 24-10-2000 |
| DE 19757936 | A | 08-07-1999 | DE | 19757936 A1 | 08-07-1999 |
| | | | AU | 9701598 A | 15-07-1999 |
| | | | JP | 11240701 A | 07-09-1999 |
| | | | US | 6284157 B1 | 04-09-2001 |
| JP 11278802 | A | 12-10-1999 | AUCUN | | |
| WO 9828223 | A | 02-07-1998 | FR | 2757499 A1 | 26-06-1998 |
| | | | AU | 5668798 A | 17-07-1998 |
| | | | BR | 9714172 A | 29-02-2000 |
| | | | CN | 1245474 A | 23-02-2000 |
| | | | EP | 0952957 A1 | 03-11-1999 |
| | | | WO | 9828223 A1 | 02-07-1998 |
| | | | JP | 2001506961 T | 29-05-2001 |
| | | | NO | 993115 A | 23-08-1999 |
| | | | US | 6245309 B1 | 12-06-2001 |
| US 5409784 | A | 25-04-1995 | WO | 9517021 A1 | 22-06-1995 |
| US 5006425 | A | 09-04-1991 | JP | 2197058 A | 03-08-1990 |
| | | | JP | 2689638 B2 | 10-12-1997 |